# EUROPEAN PATENT APPLICATION

(11) **EP 1 232 787 A1**
(43) Date of publication of application: **21.08.2002**
(21) Application number: 02003462.5
(22) Date of filing: 14.02.2002
(51) Int. Cl.: B01J 20/26, B01D 15/08, G01N 30/48

(54) **Hydrophilic separating carrier particle and process for producing the same**

(30) Priority: 15.02.2001 JP 2001037975
(71) Applicant: Showa Denko Kabushiki Kaisha, Tokyo 105-8518 (JP)
(72) Inventor: Takahashi, Ryuji, c/o Kawasaki Plant, Kawasaki-shi, Kanagawa 210-0867 (JP); Iwata, Kazunori, Kawasaki-shi, Kanagawa 210-0867 (JP)
(74) Representative: Strehl Schübel-Hopf & Partner

(57) **Abstract**

[SUMMARY]

[PROBLEM TO BE SOLVED]

To provide a hydrophilic separating carrier capable of dispensing with a hydrophilization treatment which is required in the case of conventional hydrophilic separating carriers, or with a secondary treatment for letting a group capable of converting into a hydrophilic group be converted into a hydrophilic group after the copolymerization.

[MEANS TO SOLVE THE PROBLEM]

A hydrophilic separating carrier particle for gel filtration chromatography, which is obtained by the copolymerization of a hydrophilic monomer such as N-vinylcarboxylic acid amide and a hydrophilic crosslinkable monomer such as (meth)acrylic acid ester of a polyhydric alcohol having a hydroxyl group within the molecule and which has pores of 2 to 800 nm and an average particle size of 1 to 200 µm; a production process therefor; an analysis column or cartridge for separating hydrophilic substances, in which the particles are packed; and uses of the column. or cartridge.

## Description

### [Technical Field to Which the Invention Belongs]

The present invention relates to a hydrophilic separating carrier particle and a production process therefor. More specifically, the present invention relates to a hydrophilic separating carrier particle suitable for separating water-soluble substances such as sugar, peptide and protein, in an aqueous solvent by gel filtration chromatography, a production process therefor, an analysis column or cartridge for separating hydrophilic substances using the particle, and a method for treating hydrophilic substances.

### [Background Art]

Conventionally, in separating water-soluble compounds such as sugar, peptides, proteins, polyethylene glycol and polyethylene oxide, gel filtration chromatography for separating these compounds in the order of their molecular sizes has been widely used.

The separating carrier heretofore used in the gel filtration chromatography for separating water-soluble substances is a crosslinked dextran gel obtained by crosslinking of dextran with epichlorohydrin or the like, or a crosslinked acrylamide gel obtained by the reaction between acrylamide and methylenebisacrylamide or the like. However, these gels have a problem in that the mechanical strength is low and the particle is deformed under pressure and cannot be used.

To solve this problem, various separating carriers having high mechanical strength have been disclosed for gel filtration chromatography and these are obtained by the crosslinking polymerization of a meth(acrylic) acid ester monomer. For example, JP-B-61-36177 (the term "JP-B" as used herein means an "examined Japanese patent publication") discloses a porous spherical separating carrier obtained by the aqueous suspension homopolymerization of pentaerythritol dimethacrylate or by the aqueous suspension copolymerization of pentaerythritol dimethacrylate and a methacrylate monomer having a hydrophilic group and/or a group capable of being modified into a hydrophilic group. However, since pentaerythritol dimethacrylate is not industrially mass-produced, the starting material pentaerythritol dimethacrylate must be produced firstly which makes the operation cumbersome. The homopolymer of pentaerythritol dimethacrylate has not a sufficiently high hydrophilicity, fails in eluting out polyethylene glycol standard samples in the order of their molecular weight sizes but allows hydrophobic adsorption, cannot be a hydrophilic substance separating carrier as it is and must be subjected to a hydrophilization treatment.

In the case of obtaining the hydrophilic substance separating carrier by the aqueous suspension copolymerization of pentaerythritol dimethacrylate and a methacrylate monomer having a group capable of being modified into a hydrophilic group, an operation for the modification into a hydrophilic group is necessary after the copolymerization and this is cumbersome.

Different from these, JP-A-60-96605 (the term "JP-A" as used herein means an "unexamined published Japanese patent application") discloses a method for producing a hydrophilic separating carrier by causing a ring-opening reaction of a crosslinked copolymer of (meth)acrylic acid ester having a glycidyl group using polyethylene glycol or glycerol. Even in this example, it is necessary to perform a ring-opening reaction after the copolymerization and this is cumbersome.

On the other hand, with respect to the case of using a monomer other than the (meth)acrylic acid ester, JP-B-2-19902 discloses a method for producing a hydrophilic separating carrier by copolymerizing a carboxylic acid vinyl ester monomer and a crosslinkable monomer having an isocyanurate ring and converting the ester group in the obtained copolymer into a hydroxyl group. However, even in this example, a saponification reaction is necessary after the copolymerization and this is still cumbersome.
As such, for obtaining a hydrophilic separating carrier particle having high mechanical strength, a hydrophilization treatment is performed after the homopolymerization or a treatment for conversion into a hydrophilic group is performed after the copolymerization with a monomer having a group capable of being converted into a hydrophilic group, thereby obtaining a hydrophilic separating carrier particle.

### [Problems to be Solved by the Invention]

Accordingly, the object of the present invention is to provide a hydrophilic separating carrier the production of which does not require a hydrophilization treatment which is required in the case of conventional hydrophilic separating carriers, or a secondary treatment for allowing a group capable of converting into a hydrophilic group to convert into a hydrophilic group after the copolymerization. The object of the present invention includes providing a process for producing such a hydrophilic separating carrier.

In order to overcome the above-described problems, the present inventors have continuously made extensive investigations, as a result, it has been found that a hydrophilic separating carrier particle having high mechanical strength can be obtained by copolymerizing only a specific hydrophilic monomer and a hydrophilic crosslinkable monomer. The present invention has been accomplished based on this finding.
More specifically, the present invention relates to a hydrophilic separating carrier particle, a production process therefor, a column, cartridge or reservoir using the hydrophilic separating carrier particle, and a process for treating hydrophilic low molecular substances, which are described below.
1. A hydrophilic separating carrier particle obtained by the copolymerization of a hydrophilic monomer and a hydrophilic crosslinkable monomer.
2. The hydrophilic separating carrier particle as described in 1 above, which comprises an N-vinylcarboxylic acid amide as the hydrophilic monomer in an amount of 10 to 60% by mass based on the total amount of monomers.
3. The hydrophilic separating carrier particle as described in 2 above, wherein the N-vinylcarboxylic acid amide is N-vinylacetamide.
4. The hydrophilic separating carrier particle as described in any one of 1 to 3 above, which comprises a (meth)acrylic acid ester of a polyhydric alcohol having a hydroxyl group within the molecule, as the hydrophilic crosslinkable monomer, in an amount of 90 to 40% by mass based on the total amount of monomers.
5. The hydrophilic separating carrier particle as described in 4 above, wherein the (meth)acrylic acid ester of a polyhydric alcohol having a hydroxyl group within the molecule is glycerol di(meth)acrylate.
6. The hydrophilic separating carrier particle as described in any one of 1 to 5 above, which has pores of 2 to 800 nm.
7. The hydrophilic separating carrier particle as described in any one of 1 to 6 above, which has an average particle size of 1 to 200 µm.
8. A process for producing hydrophilic separating carrier particles, comprising adding, as a diluent, from 10 to 300 parts by mass of an organic solvent which substantially dissolves in a monomer mixture but is inactive to the polymerization reaction and does not substantially dissolve the produced copolymer, per 100 parts by mass as the total amount of a monomer mixture comprising from 10 to 60% by mass of a hydrophilic monomer and from 90 to 40% by mass of a hydrophilic crosslinkable monomer and performing a suspension polymerization in an aqueous medium using a radical polymerization initiator.
9. The process for producing hydrophilic separating carrier particles as described in 8 above, wherein the hydrophilic monomer is N-vinylcarboxylic acid amide and the hydrophilic crosslinkable monomer is a (meth)acrylic acid ester of a polyhydric alcohol having a hydroxyl group within the molecule.
10. The process for producing hydrophilic separating carrier particles as described in 9 above, wherein the N-vinylcarboxylic acid amide is N-vinylacetamide.
11. The process for producing hydrophilic separating carrier particles as described in 9 or 10 above, wherein the (meth)acrylic acid ester of a polyhydric alcohol having a hydroxyl group within the molecule is glycerol di(meth)acrylate.
12. The process for producing hydrophilic separating carrier particles as described in any one of 8 to 11 above, wherein the aqueous suspension polymerization is performed by adding a salt to the aqueous phase.
13. The process for producing hydrophilic separating carrier particles as described in any one of 8 to 12 above, wherein the aqueous suspension polymerization is performed at a liquid ratio (mass ratio) of the aqueous medium phase to the organic solvent phase comprising a monomer mixture, a diluent and a polymerization initiator, of 2:1 to 10:1.
14. A cartridge or column for separating hydrophilic substances, obtained by packing the hydrophilic separating carrier particle described in any one of 1 to 7 above.
15. A method for treating an environmental, medical or biological sample, comprising using the cartridge or column described in 14 above.

### [Detailed Description of the Invention]

The mode for carrying out the present invention is described in detail below, however, the present invention is not limited thereto.
The hydrophilic separating carrier particle of the present invention is a particle obtained only by copolymerizing a hydrophilic monomer and a hydrophilic crosslinkable monomer.

The hydrophilic monomer for use in the present invention is not particularly limited as long as the monomer is hydrophilic. Examples thereof include acrylic acid, acrylic acid amide, N-vinylcarboxylic acid amides such as N-vinylformamide, N-vinylacetamide, N-vinylpropionamide, N-(propenyl-2-yl)formamide, N-(propenyl-2-yl)acetamide, N-vinyl-2-pyrrolidone and N-vinyl-2-piperidone. Among these, in view of hydrophilicity and operability of reaction, N-vinylacetamide is preferred.

The hydrophilic monomer is used in an amount of 10 to 60% by mass, preferably from 15 to 45% by mass, based on the total amount of monomers including the hydrophilic crosslinkable monomer which is described later.
The hydrophilic crosslinkable monomer for use in the present invention is not particularly limited and, for example, a (meth)acrylic acid ester of a polyhydric alcohol, selected from pentaerythritol di(meth)acrylate (the term "(meth)acrylate" as used herein means acrylate and methacrylate), pentaerythritol tri(meth)acrylate, glycerol di(meth)acrylate and glycerol (meth)acrylate acrylate, is preferably used. Among these, glycerol di(meth)acrylate is preferred in view of hydrophilicity, easy availability and operability of reaction. The hydrophilic crosslinkable monomer is contained in an amount of 90 to 40% by mass, preferably from 85 to 55% by mass, based on the total amount of monomers including the above-described hydrophilic monomer.

If the amount of the hydrophilic monomer is less than 10% by mass (if the amount of the hydrophilic crosslinkable monomer exceeds 90% by mass), the hydrophilicity is deficient for use as a packing material for gel filtration chromatography, whereas if it exceeds 60% by mass (if the amount of the hydrophilic crosslinkable monomer is less than 40% by mass), the mechanical strength is reduced and use under high pressure is disadvantageously not available.

The hydrophilic separating carrier of the present invention, which is used as a packing material for gel filtration chromatography, is a porous particle having pores of 2 to 800 nm. For the purpose of imparting the porosity, a diluent is added to the monomer mixture at the polymerization. The diluent which can be used is an organic solvent having properties such that it dissolves in the monomer mixture but is inactive to the polymerization reaction and does not dissolve the produced polymer. Examples thereof include aromatic hydrocarbons such as toluene, xylene, ethylbenzene and diethylbenzene; saturated hydrocarbons such as hexane, heptane, octane and decane; alcohols such as isoamyl alcohol, hexyl alcohol, octyl alcohol and 2-ethylhexyl alcohol; aliphatic halogenated hydrocarbons such as dichloromethane, dichloroethane and trichloroethane; aliphatic or aromatic esters such as ethyl acetate, butyl acetate, dimethyl phthalate and diethyl phthalate; and glycerol triesters such as triacetin, tributyrin and tricaprin. These organic solvents used as a diluent can be used individually or in combination of two or more thereof.

The amount of the diluent added is from 10 to 300% by mass, preferably from 20 to 150% by mass, based on the total amount of the hydrophilic monomer and the hydrophilic crosslinkable monomer.

The hydrophilic copolymer particle of the present invention is produced by suspension polymerization in an aqueous medium containing an appropriate dispersion stabilizer. The polymerization initiator used here is not particularly limited as long as it is a known radical polymerization initiator capable of generating a radical, and examples thereof include azo-type initiators such as 2,2'-azobisisobutyronitrile and 2,2'-azobis(2,4-dimethylvaleronitrile). The concentration of the polymerization initiator is not particularly limited but is preferably from 0.1 to 5% by mass based on the total amount of monomers.
For the polymerization reaction, a suspension polymerization method of suspending a monomer solution containing a diluent with stirring in an aqueous medium containing an appropriate dispersion stabilizer and thereby allowing the polymerization to proceed may be applied.

The dispersion stabilizer may be a known dispersion stabilizer and in general, a water-soluble polymer compound such as gelatin, sodium polyacrylate, polyvinyl alcohol, hydroxyethyl cellulose and carboxymethyl cellulose is used. The concentration of the dispersion stabilizer is preferably from 0.1 to 5% by mass based on the aqueous medium. The aqueous medium is a medium mainly comprising water, which may contain a salt and other water-soluble components in addition to water.

In the polymerization reaction, the reaction is preferably performed by dissolving a salt in the aqueous medium so as to prevent the monomers from dissolving in the aqueous medium. Examples of the salts include sodium chloride, calcium chloride and sodium sulfate which are commonly used. The solubility varies depending on the salts used and therefore, the concentration cannot be indiscriminately specified but, for example, sodium chloride is preferably dissolved and used in an amount of 0.1 to 15% by mass and calcium chloride is preferably dissolved and used in an amount of 1 to 40% by mass. Furthermore, a slight amount of sodium nitrite may be added so as to prevent the polymerization of dissolved matters in the aqueous medium.

Particularly, in the case of N-vinylcarboxylic acid amide which is preferably used as a hydrophilic monomer, the solubility in water is high and therefore, a salt is preferably used in a high concentration so as to prevent the dissolution.

The liquid ratio (mass ratio) of the aqueous dispersion medium phase containing a dispersion stabilizer and a salt to the organic solvent phase formed by mixing a diluent with a monomer mixture comprising a hydrophilic monomer and a hydrophilic crosslinkable monomer and dissolving a polymerization initiator is preferably from 2:1 to 10:1. If the liquid ratio exceeds this range (if the ratio of the aqueous dispersion medium increases), the hydrophilic monomer such as N-vinylcarboxylic acid amide is distributed in the aqueous dispersion medium phase and the yield decreases, whereas if the liquid ratio is too small, the suspension dispersion of the organic solvent phase becomes unstable.

In the polymerization reaction, the reaction is usually performed, after purging with nitrogen gas, under heating to 40 to 100°C with stirring for 5 to 16 hours under atmospheric pressure. The above-described organic solvent layer is formed into spherical particles by stirring and the particles disperse in the aqueous medium, whereby the reaction proceeds. At this time, the particles each containing a diluent are polymerized and the polymer grows as a network polymer, so that when the diluent is removed later, porous particles can be obtained.

After the reaction, the particles can be easily separated by filtration or the like and the diluent can be easily removed through washing with a solvent such as acetone or methanol and then drying. The thus-obtained hydrophilic separating carrier particle is classified into a particle size of 1 to 200 µm, preferably from 1 to 100 µm, more preferably from 3 to 15 µm for analysis column or from 10 to 70 µm for sample pretreatment and then used as a hydrophilic separating carrier particle for gel filtration chromatography. If the particle size is less than 1 µm, the particles disadvantageously pass through a filter or frit for preventing the outflow of gel, whereas if the particle size exceeds 200 µm, the packed column performance is reduced due to decrease in the resolving power and this is not preferred.

The hydrophilic separating carrier particle of the present invention can be not only used for the analysis or purification by packing it into a column under a high pressure as a carrier for gel filtration chromatography of water-soluble substances but also can be widely applied to the concentration of trace components or removal of impurities or contaminants by packing the hydrophilic separating carrier particle classified for sample pretreatment into a container called reservoir, such as column or cartridge.

The shape and construction material of the reservoir container such as a column and a cartridge are not particularly limited as long as the container is insoluble in the organic solvent used and impurities do not dissolve out from the container itself during the operation of sample pretreatment.

In the present invention, the cartridge means a cylindrical container having an internal diameter of 2 to 8 mmφ and a length of 10 to 30 mm with both ends being stopped by a frit or filter to prevent outflow of the packing material, where the frit or filter is fastened by a cap having a hole of 0.1 to 1 mmφ in the center. The cartridge by itself has no connector necessary for flowing a liquid and therefore, is used by fixing it to an exclusive reservoir container called cartridge holder, guard holder or holder.

The column means a cylindrical container having an internal diameter of 2 to 8 mmφ and a length of from 10 to 50 mm with the both ends being stopped by an end fitting, where the end fitting has a joint connector together with a frit or filter for preventing outflow of the packing material and therefore, the container can be directly connected to allow the flowing of a liquid.

Examples of the construction material for the cartridge or column include inorganic materials such as stainless steel and glass, and synthetic resin materials such as polyethylene, polypropylene and polyether ether ketone. Among these, in view of simplicity, convenience and cost, a polyethylene-made container is preferred and examples thereof include an injector-type container having a volume of 1 to 200 mL, preferably from 1 to 100 mL.

The filter or frit used by setting to both ends of the column or cartridge so as to prevent the hydrophilic separating carrier particle from dissolving out during the operation of sample pretreatment is a porous plate material having pores of 5 to 200 µm, preferably from 10 to 50 µm. The construction material is not particularly limited but examples thereof include stainless steel, glass, polyethylene and polytetrafluoroethylene. Among these, polyethylene is preferred in view of the cost and operability.

The amount of particles packed in the reservoir of a column or a cartridge for the sample pretreatment varies depending on the bulk density of particles or the concentration of the sample, however, the amount packed is from 30 to 500 mg, preferably from 50 to 300 mg, based on the volume of 3 mL.
The column or cartridge for sample pretreatment can also be applied to a sample pretreatment using a column switching method. Various methods are known for the column switching method and examples thereof include a method where a column or cartridge for sample pretreatment is fixed in front of a column for analysis, impurities or contaminants present together are adsorbed by the column or cartridge for sample pretreatment to feed only necessary fractions to the column for analysis, and the column or cartridge for sample pretreatment is washed with another eluent by changing over the valve while continuing the analysis, and a method where only necessary fractions are on the contrary once adsorbed to the column or cartridge for sample pretreatment and after interfering components are flown out, the valve is switched over to introduce the adsorbed components newly with another eluent into the column for analysis.

The use of the column or cartridge packed with the hydrophilic separating carrier of the present invention is not particularly limited, however, the column or cartridge may be used for gel filtration chromatography of water-soluble substances or for sample pretreatment. In view of the purpose of the sample pretreatment, the column or cartridge can be used for concentrating a trace objective substance contained in an extra dilute solution and/or for easily removing impurities or contaminants present together in the analysis and treatment of an environmental sample, a medical sample or the like. More specifically, the column or cartridge can be suitably used for the measurement of harmful substances such as agrochemical in river water, the measurement of residual agrochemical in farm products, the measurement of drugs in serum, and the like.

The pretreatment method for an environmental or medical sample, which uses the column or cartridge packed with the hydrophilic separating carrier according to the present invention, is gel filtration of separating the components by the molecule size using the above-described hydrophilic separating carrier particle and/or the above-described column or cartridge for sample pretreatment. The treatment method of the present invention is to concentrate a trace objective substance contained in an extra dilute solution and/or remove impurities or contaminants present together at the analysis of various samples and this method can also be applied as a pretreatment and/or a posttreatment in various analyses.

### [Examples]

The present invention is described in greater detail below by referring to the Examples, however, the present invention is by no means limited to these Examples.

### Example:

### (Preparation of hydrophilic separating carrier copolymer particle)

In 22.50 g of glycerol dimethacrylate (NK Ester 701, produced by Shin Nakamura Kagaku Kogyo K.K.) as a monomer phase and 20.00 g of triacetin (produced by Wako Pure Chemical Industries, Ltd.) as a diluent, 52.50 g of pulverized N-vinyl-acetamide (NVA monomer, produced by Showa Denko K.K.) was dissolved and subsequently, 2.00 g of 2,2'-azobis(2,4-dimethylvaleronitrile) was dissolved to prepare an oil phase.
In 240 mL of deionized water, 85.77 g of calcium chloride and 8.58 g of sodium chloride were dissolved to prepare a salt solution. Subsequently, 4 g of polyvinyl alcohol (Kuraray Poval PVA-224, produced by Kuraray K.K.) and 4 g of sodium chloride were dissolved in 100 mL of deionized water and from the resulting solution, 72 mL was sampled and added to the salt solution. Furthermore, 6.4 mg of sodium nitrite was dissolved in 10 mL of deionized water and from the resulting solution, 6 mL was sampled and added to the salt solution to prepare a salt solution.

The oil phase and the aqueous phase were mixed and stirred at a high speed of 1,800 rpm for 5 minutes in Excel Auto Homogenizer (produced by Nihon Seiki Seisakusho K.K.) to adjust the oil droplets to from 10 to 100 µm. Thereafter, the obtained mixture was poured into a 1 L-volume separable flask and reacted for 6 hours by elevating the temperature to 70°C while stirring at 100 rpm in a water bath in a nitrogen gas atmosphere. After cooling, the copolymer particles produced were separated by filtration through a filter paper of No. 101, washed with 2 L of deionized water and further with 2 L of acetone, then air-dried by spreading the particles on a stainless steel-made vat, and further dried under reduced pressure at 60°C for 16 hours. The copolymer particles obtained were classified into a particle size of 15 to 20 µm using a pneumatic classifier (MINI. CLASSIFIER, manufactured by NIPPON PNEUMATIC MFG) to prepare hydrophilic separating carrier particles.

### (Configuration of Calibration Curve Using Pullulan and Polyethylene Glycol by Gel Filtration Chromatography)

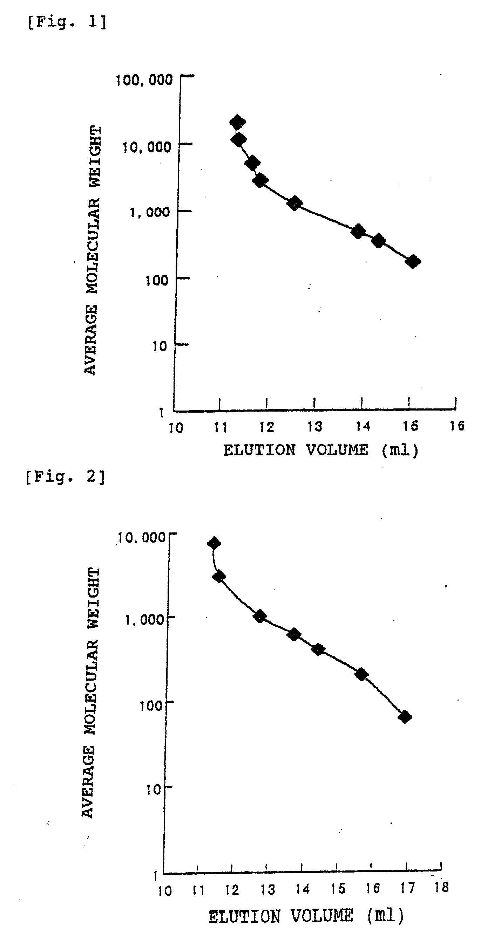

Using a packer and a pump, the hydrophilic separating carrier particles obtained above and classified into 15 to 20 µm were packed under high pressure into a stainless steel column for liquid chromatography, having an inside diameter of 4.6 mm and a length of 150 mm by an equilibrium slurry method to obtain a packed column for gel filtration. This column was connected to a high performance liquid chromatograph and then, deionized water as a moving phase was flown at a flow rate of 0.33 ml/min. Thereafter, Pullulan Standard (Shodex (registered trademark of Showa Denko K.K.) STANDARD P-82, produced by Showa Denko K.K., average molecular weight: 20,800, 12,000, 5,300, 2,930 or 1,330) as a polysaccharide standard reagent, maltotriose (molecular weight: 504, produced by Tokyo Kasei Kogyo K.K.), maltose (molecular weight: 342, produced by Wako Pure Chemical Industries, Ltd.) and grape sugar (molecular weight: 180, produced by Wako Pure Chemical Industries, Ltd.) were individually injected. The chromatography was performed under the following conditions and from the obtained chromatogram, the elution volume was determined. Using the obtained values, a calibration curve at the time of using polysaccharide was configured (see Fig. 1). Also, polyethylene glycols (produced by Wako Pure Chemical Industries, Ltd., average molecular weight: 7,500, 3,000, 1,000, 600, 400 or 200) and ethylene glycol (molecular weight: 62, produced by Wako Pure Chemical Industries, Ltd.) were individually injected as the synthetic polymer standard samples and the chromatography was performed under the same conditions. From the obtained chromatogram, the elution volume was determined and using the obtained values, a calibration curve at the time of using polyethylene glycol was configured (see Fig. 2).

| Conditions for High Performance Liquid Chromatography: | |
|---|---|
| Column | inside diameter: 4.6 mmφ, length: 150 mm |
| Moving phase | deionized water |
| Flow rate | 0.33 mL/min |
| Detector | differential refractometer (Shodex (registered trademark of Showa Denko K.K.) RI-71, produced by Showa Denko K.K.) |

It can be seen from Figs. 1 and 2 that the hydrophilic separating carrier particles prepared in the Example and classified into 15 to 20 µm have an exclusive limit molecular weight of 3×10³ with pullulan standard and an exclusive limit molecular weight of 2×10³ with polyethylene glycol and these particles can be suitably used as a packing agent for gel filtration chromatography.

### [Effects of the Invention]

According to the present invention, a hydrophilic separating carrier particle suitable for the separation of water-soluble substances in an aqueous solvent by gel filtration chromatography is produced only by copolymerizing a hydrophilic monomer and a hydrophilic crosslinkable monomer, which has heretofore not been thought out.
The hydrophilic separating carrier particle according to the present invention can be used as a packing agent for gel filtration not only for separation and analysis of a hydrophilic substance but also for sample pretreatment. In particular, an objective substance contained in an environmental, biochemical or medical sample can be easily fractionated and purified and at the same time, impurities or contaminants present together can be easily removed. Therefore, the fractionation of a necessary substance or various analyses can be easily performed with good precision. The hydrophilic separating carrier particle according to the present invention is effective in the field over a wide range, for example, in the measurement of harmful substances such as agrochemical in river water, in the measurement of residual agrochemical in farm products, in the measurement of a drug in serum, in the fractionation of low molecular substances produced by microorganisms, or in the purification of polymer obtained by solid phase synthesis or liquid phase synthesis.

### [BRIEF DESCRIPTION OF DRAWINGS]

### [Fig. 1]

Fig. 1 is a calibration curve obtained with standard samples of polysaccharides and saccharides using the hydrophilic separating carrier particle of the Example.

### [Fig. 2]

Fig. 2 is a calibration curve obtained with standard samples of polyethylene glycol and ethylene glycol using the hydrophilic separating carrier particle of the Example.

## Claims

1. A hydrophilic separating carrier particle obtained by copolymerization of a hydrophilic monomer and a hydrophilic crosslinkable monomer.

2. The hydrophilic separating carrier particle according to claim 1, which comprises an N-vinylcarboxylic acid amide as the hydrophilic monomer in an amount of 10 to 60% by mass based on the total amount of monomers.

3. The hydrophilic separating carrier particle according to claim 2, wherein the N-vinylcarboxylic acid amide is N-vinylacetamide.

4. The hydrophilic separating carrier particle according to any one of the claims 1 to 3, which comprises a (meth)acrylic acid ester of a polyhydric alcohol having a hydroxyl group within the molecule, as the hydrophilic crosslinkable monomer, in an amount of 90 to 40% by mass based on the total amount of monomers.

5. The hydrophilic separating carrier particle according to claim 4, wherein the (meth)acrylic acid ester of a polyhydric alcohol having a hydroxyl group within the molecule is glycerol di(meth)acrylate.

6. The hydrophilic separating carrier particle according to any of the claims 1 to 5, which has pores of 2 to 800 nm.

7. The hydrophilic separating carrier particle according to claim 6, which has an average particle size of 1 to 200 µm.

8. A process for producing hydrophilic separating carrier particles, comprising adding, as a diluent, from 10 to 300 parts by mass of an organic solvent which substantially dissolves in a monomer mixture but is inactive to the polymerization reaction and does not substantially dissolve the produced copolymer, per 100 parts by mass of the total amount of a monomer mixture comprising from 10 to 60% by mass of a hydrophilic monomer and from 90 to 40% by mass of a hydrophilic crosslinkable monomer and performing a suspension polymerization in an aqueous medium using a radical polymerization initiator.

9. The process for producing hydrophilic separating carrier particles according to claim 8, wherein the hydrophilic monomer is N-vinylcarboxylic acid amide and the hydrophilic crosslinkable monomer is a (meth)acrylic acid ester of a polyhydric alcohol having a hydroxyl group within the molecule.

10. The process for producing hydrophilic separating carrier particles according to claim 9, wherein the N-vinylcarboxylic acid amide is N-vinylacetamide.

11. The process for producing hydrophilic separating carrier particles according to claim 9 or 10, wherein the (meth)acrylic acid ester of a polyhydric alcohol having a hydroxyl group within the molecule is glycerol di(meth)acrylate.

12. The process for producing hydrophilic separating carrier particles according to any of the claims 8 to 11, wherein the aqueous suspension polymerization is performed by adding a salt to the aqueous phase.

13. The process for producing hydrophilic separating carrier particles according to any of the claims 8 to 12, wherein the aqueous suspension polymerization is performed at a liquid ratio (mass ratio) of the aqueous medium phase to the organic solvent phase comprising a monomer mixture, a diluent and a polymerization initiator, of 2:1 to 10:1.

14. A cartridge or column for separating hydrophilic substances, having a packing that comprises the hydrophilic separating carrier particle according to any of the claims 1 to 7.

15. A method for treating an environmental, medical or biological sample, comprising using the cartridge or column according to claim 14.
